# EUROPEAN PATENT APPLICATION

(11) **EP 4 813 630 A1**
(43) Date of publication of application: **30.09.2026**
(21) Application number: 24894165.0
(22) Date of filing: 20.11.2024
(51) Int. Cl.: B32B 27/20, B32B 7/022, C09J 7/30, C09J 7/38

(54) **LAMINATED SHEET AND SKIN DESIGN SHEET**

(30) Priority: 20.11.2023 JP 2023196541
(71) Applicant: Dai Nippon Printing Co., Ltd., Tokyo-to 162-8001 (JP)
(72) Inventor: IMAKURA Yuzu, Tokyo-to 162-8001 (JP); ARAKI Asuka, Tokyo-to 162-8001 (JP); IWAI Kazuma, Tokyo-to 162-8001 (JP)
(74) Representative: Cabinet Beau de Loménie
(86) International application number: PCT/JP2024/041107
(87) International publication number: WO 2025/110174

(57) **Abstract**

The present invention provides a laminated sheet that can be used as a skin design sheet which suppresses occurrence of wrinkles upon attachment to the skin and makes the skin look natural. The laminated sheet includes at least a receiving layer, a concealing layer, and a base material layer in this order. The laminated sheet with a width of 10 mm has a tensile test force of 0.10 N or greater and 0.62 N or less at 5% elongation, as measured in conformity with JIS K 7127:1999.

## Description

### Cross-Reference to Related Applications

This application claims priority based on Japanese Patent Application No. 2023-196541, filed on November 20, 2023, the entire disclosure content of which is incorporated herein by reference.

### Technical Field

The present invention relates to a laminated sheet and a skin design sheet.

### Background Art

Skin design sheets that are used by being attached to the skin are known (for example, see PTL 1). A skin design sheet includes, for example, a release sheet, a pressure-sensitive adhesive layer, a base material layer, and a protective sheet in this order in a thickness direction. The skin design sheet is attached to the skin of a user by the procedure of peeling the release sheet from the pressure-sensitive adhesive layer, attaching the pressure-sensitive adhesive layer to the skin, and peeling the protective sheet from the base material layer.

Examples of the skin design sheet include a tattoo sticker and a skin concealing sheet. The tattoo sticker is a sheet with various designs printed on a base material. The tattoo stickers are sold at, for example, variety stores, sports and music venues, amusement parks, and the like, and are used to create a vibrant atmosphere. The skin concealing sheet is a sheet in which a base material is colored in advance with a predetermined color by screen printing or the like. The skin concealing sheet is used, for example, to conceal discolored portions such as scars and blemishes on the skin. The user selects and uses a skin design sheet that matches the color of their skin.

### Citation List

### Patent Literature

PTL 1: Japanese Patent No. 6147874

### Summary of Invention

### Technical Problem

However, since the colors of the skin concealing sheets available on the market are limited, the users found the color difference between the skin concealing sheets and their skin tones noticeable and were dissatisfied in some cases. Therefore, it has been examined to provide a skin design sheet including a printed layer having a color tone that matches the user's skin tone by forming an image through on-demand printing from a photographic image that captures the user. In this manner, the visual discomfort felt upon attachment of the skin design sheet to the user's skin can be suppressed.

Such a skin design sheet is required to make the user's skin look natural upon attachment to the skin, but the skin is translucent and thus may have an unnatural appearance due to a difference in appearance from the skin design sheet made to be opaque by printing. Further, wrinkles occur upon attachment of the skin design sheet to the skin, which may result in an unnatural appearance.

An object of the present disclosure is to provide a laminated sheet that can be used as a skin design sheet which suppresses occurrence of wrinkles upon attachment to the skin and makes the skin look natural.

Further, another object of the present disclosure is to provide a skin design sheet that suppresses occurrence of wrinkles upon attachment to the skin and makes the skin look natural.

### Solution to Problem

The present disclosure provides a laminated sheet including at least: a receiving layer; a concealing layer; and a base material layer in this order, in which the laminated sheet with a width of 10 mm has a tensile test force of 0.10 N or greater and 0.62 N or less at 5% elongation, as determined by a test method in conformity with JIS K 7127:1999.

### Advantageous Effects of Invention

According to the present disclosure, it is possible to provide a laminated sheet that can be used as a skin design sheet which suppresses occurrence of wrinkles upon attachment to the skin and makes the skin look natural.

Further, according to the present disclosure, it is possible to provide a skin design sheet that suppresses occurrence of wrinkles upon attachment to the skin and makes the skin look natural.

### Brief Description of Drawings

[Fig. 1] Fig. 1 is a cross-sectional view showing a laminated sheet according to an embodiment to which the present invention is applied.
[Fig. 2] Fig. 2 is a cross-sectional view showing a laminated sheet according to an embodiment to which the present invention is applied.

### Description of Embodiments

Hereinafter, embodiments of the present disclosure will be described in detail. The present disclosure can be implemented in many different forms and should not be construed as limited to the described contents according to the following exemplary embodiments. The drawings may schematically show the width, the thickness, the shape, and the like of each layer compared to the embodiments in order to further clarify the description, but these are merely examples, and do not limit the interpretation of the present disclosure. In the present specification and each drawing, the same elements as already described in relation to the drawings are denoted by the same reference numerals, and the detailed description thereof may be omitted as appropriate.

In the present disclosure, when a certain parameter has a plurality of upper and lower limit candidates, the numerical range of the parameter may be defined by combining any one of the upper limit candidates with any one of the lower limit candidates. Examples of the parameter include physical property values, the content proportions of components, and thicknesses of layers. As an example, the description "a parameter B is preferably A1 or greater, more preferably A2 or greater, and still more preferably A3 or greater. The parameter B is preferably A4 or less, more preferably A5 or less, and still more preferably A6 or less" will be described. In this example, the numerical range of this parameter B may be A1 or greater and A4 or less, A1 or greater and A5 or less, A1 or greater and A6 or less, A2 or greater and A4 or less, A2 or greater and A5 or less, A2 or greater and A6 or less, A3 or greater and A4 or less, A3 or greater and A5 or less, and A3 or greater and A6 or less.

In the present specification, each of the components appearing in the following description (for example, resin materials and additives such as colorants) may be used alone or in combination of two or more kinds thereof.

### [Laminated sheet]

A laminated sheet of the present disclosure includes at least a receiving layer, a concealing layer, and a base material layer in this order.

Hereinafter, specific examples of the laminated sheet according to the present disclosure will be described with reference to the accompanying drawings.

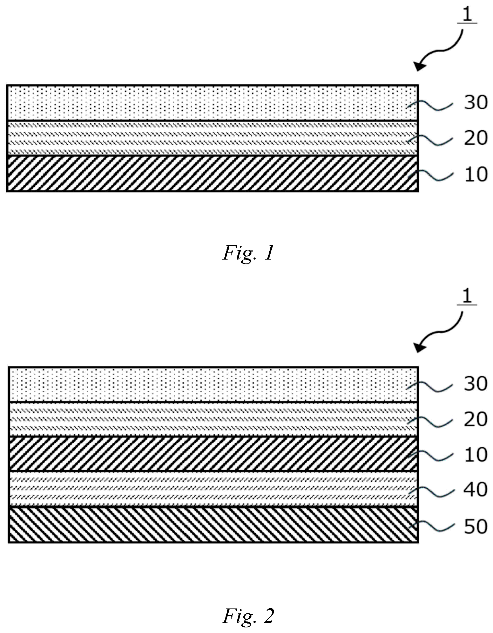

A laminated sheet 1 shown in Fig. 1 includes a base material layer 10, a concealing layer 20, and a receiving layer 30 in this order in a thickness direction. In this example, an image of a desired color such as the skin color may be formed on the receiving layer 30 using a colorant such as a dye.

The laminated sheet may further include an adhesive layer (not shown) between the base material layer and the concealing layer. The laminated sheet may include a base material layer, an adhesive layer, a concealing layer, and a receiving layer in this order in the thickness direction.

The laminated sheet may further include a protective layer (not shown) on the base material layer. The laminated sheet may include a base material layer, a concealing layer, a receiving layer, and a protective layer in this order in the thickness direction.

The laminated sheet may further include a pressure-sensitive adhesive layer, a release sheet, and optionally a protective sheet (not shown) on the surface of the base material layer opposite to the surface facing the receiving layer.

The laminated sheet 1 shown in Fig. 2 includes a release sheet 50, a pressure-sensitive adhesive layer 40, the base material layer 10, the concealing layer 20, and the receiving layer 30 in this order in the thickness direction. In this example, one or both sides of the base material layer 10 may be colored with a colorant to a desired color such as the skin color. A printed layer may be provided on either or both surfaces of the base material layer 10.

The laminated sheet may optionally include a release sheet, a pressure-sensitive adhesive layer, a base material layer, a concealing layer, a receiving layer on which an image is formed, a protective layer, and optionally a protective sheet in this order.

The laminated sheet according to one embodiment of the present disclosure has a long strip shape, and Figs. 1 and 2 are, for example, cross-sectional views perpendicular to the longitudinal direction of the laminated sheet 1.

### <Base material layer>

The laminated sheet of the present disclosure includes a base material layer.

Examples of the base material layer include a resin film formed of a resin material. Examples of the resin material include polyurethane, polyester, polyamide, polyimide, a polyolefin, a vinyl resin, a styrene resin, an acrylic resin, and a cellulose resin.

For example, an elastic base material is preferably used as the base material layer. Examples of the elastic base material include the resin films described above. Among the resin films, a polyvinyl chloride (PVC) film, a polyurethane film, or a polyethylene film is preferable, and a polyurethane film is more preferable.

The elastic base material preferably has an elongation percentage of 30% or greater and 100% or less to follow expansion and contraction of an adherend upon attachment of the laminated sheet to the adherend. The elongation percentage of the elastic base material is determined by the test method in conformity with JIS K 7127:1999. The elongation percentage is represented by Equation (1).$Elongation percentage \left(%\right) = 100 \times \left(L-L0\right) / L 0$

L in Equation (1) represents the length of the elastic base material at break when stretched at a speed of 200 mm/min using a tensile tester. L0 in Equation (1) represents the length of the elastic base material before being stretched using a tensile tester. A TENSILON universal testing machine can be used as the tensile tester.

The base material layer may contain an additive. Examples of the additive include an ultraviolet absorber, a light stabilizer, an antioxidant, a colorant, a filler, and a release agent. The base material layer may optionally contain a colorant. The base material layer may contain a colorant to adjust the color tone of the laminated sheet to a desired color such as the skin color. Examples of the colorant include a pigment and a dye.

The thickness of the base material layer is preferably 3 µm or greater. The laminated sheet including the base material layer with a thickness of 3 µm or greater can suppress, for example, the occurrence of wrinkles upon attachment to the skin. Further, when the laminated sheet includes the base material layer with a thickness of 5 µm or greater, the release sheet can be easily peeled off from the laminated sheet and attached without the base material layer (sticker paper) being twisted, and thus the workability can be improved.

Further, the thickness of the base material layer is preferably 10 µm or less and more preferably 7 µm or less. The laminated sheet including such a base material layer can suppress, for example, the user from feeling visual discomfort after the sheet is attached to the skin.

Specifically, the thickness of the base material layer is 3 µm or greater and 10 µm or less.

A printed layer may be provided on the base material layer. The printed layer may be a layer for adjusting the color tone of the laminated sheet to a desired color such as the skin color. The printed layer contains a colorant. Examples of the colorant include a pigment and a dye.

### <Concealing layer>

The laminated sheet of the present disclosure includes a concealing layer.

Examples of the concealing layer include a white primer layer containing a white pigment and a resin material.

Examples of the white pigment include titanium oxide, zinc oxide, zinc sulfide, barium sulfate, and calcium carbonate. Among these, from the viewpoint of whiteness, titanium oxide is preferable.

The concealing layer can contain one or two or more kinds of white pigments.

The content proportion of the white pigment in the concealing layer is preferably 40% by mass or greater and 85% by mass or less and more preferably 50% by mass or greater and 80% by mass or less. Here, the contrast ratio of the concealing layer described below and the tensile test force of the laminated sheet with a width of 10 mm at 5% elongation can be increased by increasing the content proportion of the white pigment in the concealing layer. Meanwhile, the contrast ratio of the concealing layer described below and the tensile test force of the laminated sheet with a width of 10 mm at 5% elongation can be decreased by decreasing the content proportion of the white pigment in the concealing layer.

Examples of the resin material include a (meth)acrylic resin, a polyolefin, a styrene resin, a vinyl resin such as an ethylene-vinyl acetate copolymer or a vinyl chloride-vinyl acetate copolymer, polyester, polyamide, an imide resin, a cellulose resin, a polyol resin, a polycarbonate, and an ionomer resin.

The concealing layer can contain one or two or more kinds of resin materials.

It is preferable that the concealing layer contain either or both of a (meth)acrylic resin and a polyol resin as the main resin material. In this manner, the dispersion stability of the white pigment in a coating liquid for forming a concealing layer can be improved, and the occurrence of coating defects and the like can be suppressed. The main resin material is a resin material that accounts for 70 parts by mass or greater with respect to 100 parts by mass of the total amount of the resin materials contained in the concealing layer.

From the viewpoint of improving the adhesiveness of the concealing layer to the base material layer when the concealing layer is transferred to and formed on the base material layer, the concealing layer preferably contains a vinyl resin and more preferably a vinyl chloride-vinyl acetate copolymer. The content proportion of the vinyl resin in the concealing layer is preferably 0.3% by mass or greater and 10% by mass or less and more preferably 0.5% by mass or greater and 5% by mass or less. In this manner, the adhesiveness of the concealing layer to the base material layer can be further improved while the thermal transferability of the concealing layer is maintained.

From the viewpoint of improving the adhesiveness of the concealing layer to the base material layer, it is preferable that the concealing layer contain polyester. The content proportion of the polyester in the concealing layer is preferably 0.03% by mass or greater and 1% by mass or less and more preferably 0.1% by mass or greater and 1% by mass or less. In this manner, the adhesiveness of the concealing layer to the base material layer can be further improved while the thermal transferability of the concealing layer is maintained.

The content proportion of the resin material in the concealing layer is preferably 10% by mass or greater and 70% by mass or less and more preferably 10% by mass or greater and 50% by mass or less. In this manner, reaggregation of the white pigment can be suppressed, and thus high concealing properties can be obtained.

The concealing layer may contain an additive. Examples of the additive include a filler, a plasticizer, an antistatic agent, an ultraviolet absorber, a release agent, and a dispersant. The concealing layer can contain one or two or more kinds of additives.

The thickness of the concealing layer is preferably 0.6 µm or greater, more preferably 0.8 µm or greater, and still more preferably 1.0 µm or greater. The thickness of the concealing layer is preferably 6 µm or less, more preferably 5 µm or less, and still more preferably 4 µm or less. Here, when the thickness of the concealing layer is increased, the color of the base can be concealed. Meanwhile, when the thickness of the concealing layer is decreased, the contrast ratio of the concealing layer described below and the tensile test force of the laminated sheet with a width of 10 mm at 5% elongation can be decreased.

Specifically, the thickness of the concealing layer is 0.6 µm or greater and 6 µm or less.

A contrast ratio (YB/YW) of the concealing layer, as determined by the test method in conformity with JIS K 5600-4-1, is a value calculated by performing measurement from a surface side of a receiving layer using the laminated sheet composed of a pressure-sensitive adhesive layer, a base material layer, a concealing layer, and a receiving layer. The contrast ratio will be described in detail in examples below.

The contrast ratio of the concealing layer is preferably 15% or greater, more preferably 20% or greater, and still more preferably 40% or greater. Further, the contrast ratio of the concealing layer is preferably 85% or less, more preferably 70% or less, and still more preferably 60% or less. Specifically, the contrast ratio of the concealing layer is 15% or greater and 85% or less. When the contrast ratio of the concealing layer is 15% or greater, the laminated sheet including the concealing layer is used as a skin design sheet and can effectively conceal blemishes and the like upon attachment to the skin. Further, when the contrast ratio of the concealing layer is 70% or less, the tensile test force of the entire laminated sheet with a width of 10 mm at 5% elongation is easily adjusted to be in a predetermined range. Further, when the contrast ratio of the concealing layer is 60% or less, the laminated sheet including the concealing layer is used as a skin design sheet and can make the skin look more natural upon attachment to the skin.

The concealing layer can be formed, for example, by coating an optional layer provided on a base material of a base material layer or a transfer sheet with a coating liquid obtained by dispersing or dissolving the above-described components in an appropriate solvent using the above-described known coating method and drying the coating liquid.

### (Adhesive layer)

The laminated sheet of the present disclosure may include an adhesive layer.

According to an embodiment, the laminated sheet may include an adhesive layer between the base material layer and the concealing layer. In this case, the adhesiveness between the base material layer and the concealing layer when the concealing layer provided on the transfer sheet is transferred to the base material layer can be further enhanced.

It is preferable that the adhesive layer contain a resin material. Examples of the resin material include a (meth)acrylic resin, a vinyl resin, a polyolefin, polyester, polyurethane, an epoxy resin, a urea resin, a melamine resin, and a phenol resin. The adhesive layer can contain one or two or more kinds of resin materials.

The content proportion of the resin material in the adhesive layer is preferably 70% by mass or greater and 100% by mass or less and more preferably 80% by mass or greater and 100% by mass or less.

The adhesive layer may be a layer obtained by curing the resin material with a curing agent. Examples of the curing agent include an isocyanate compound, an aliphatic amine, a cyclic aliphatic amine, an aromatic amine, and an acid anhydride.

The thickness of the adhesive layer is preferably 0.1 µm or greater, more preferably 0.5 µm or greater, and preferably 10 µm or less, and more preferably 2 µm or less. The thickness of the adhesive layer is, for example, 0.1 µm or greater and 10 µm or less.

The adhesive layer can be formed, for example, by coating the concealing layer with a coating liquid obtained by dispersing or dissolving the above-described components in an appropriate solvent using the above-described known coating method and drying the coating liquid.

### <Receiving layer>

The laminated sheet of the present disclosure includes a receiving layer.

The receiving layer is a layer for receiving a dye and the like transferred from a thermal transfer sheet. For example, when an image is formed using a printer, the image may be formed on the receiving layer provided on the base material layer in advance, or the base material layer may be transferred via the concealing layer after formation of the image on the receiving layer provided on the transfer sheet. The image may be, for example, an image used for adjusting the color tone of the laminated sheet to a desired color such as the skin color.

For example, a resin material can be used as the material constituting the receiving layer. Examples of the resin material include a polyolefin, a vinyl resin, a styrene resin, an acrylic resin, polyester, polyamide, polyimide, polyurethane, a polycarbonate, a cellulose resin, and an ionomer resin. Examples of the polyolefin include polyethylene and polypropylene. Examples of the vinyl resin include polyvinyl chloride, polyvinyl acetate, and a vinyl chloride-vinyl acetate copolymer. Examples of the polyester include polyethylene terephthalate and polyethylene naphthalate. The resin material constituting the receiving layer is preferably a vinyl resin and more preferably a vinyl chloride-vinyl acetate copolymer.

The content proportion of the resin material in the receiving layer is preferably 70% by mass or greater and more preferably 80% by mass or greater with respect to the total mass of the receiving layer. In this manner, for example, sufficient durability can be imparted to the receiving layer.

The receiving layer may contain an additive. Examples of the additive include an ultraviolet absorber, a light stabilizer, an antioxidant, a colorant, a filler, and a release agent.

The content proportion of the additive in the receiving layer is preferably 1% by mass or greater, more preferably 2% by mass or greater, and preferably 30% by mass or less, and more preferably 20% by mass or less with respect to the total mass of the receiving layer. The content proportion of the additive in the receiving layer is, for example, 1% by mass or greater and 30% by mass or less.

The thickness of the receiving layer is preferably 0.3 µm or greater, more preferably 0.5 µm or greater, and still more preferably 0.8 µm or greater. The thickness of the receiving layer is preferably 5.0 µm or less, more preferably 3.0 µm or less, and still more preferably 2.0 µm or less. Here, when the thickness of the receiving layer is greater than or equal to the above-described lower limits, a sufficient print density cannot be obtained. Meanwhile, when the thickness of the receiving layer is less than or equal to the above-described upper limits, the followability upon attachment of the sheet to the skin is insufficient, and a sense of uniformity with the skin cannot be obtained. The thickness of the receiving layer is, for example, 0.3 µm or greater and 5.0 µm or less.

When the receiving layer is provided on the base material layer in advance, in a step of coating the concealing layer with a coating liquid for a receiving layer and drying the coating liquid, the base material layer may be melted and damaged, denatured, or deformed by the solvent contained in the coating liquid. In this case, it is preferable that the receiving layer be transferred onto the base material layer by thermal transfer. The receiving layer may be provided on the base material layer in advance, or may be provided thereon by thermal transfer during image formation.

### (Protective layer)

The laminated sheet of the present disclosure may include a protective layer.

The laminated sheet of the present disclosure may include, for example, a base material layer, a concealing layer, a receiving layer, and a protective layer in this order, or a base material layer, a concealing layer, a receiving layer on which an image is formed, and a protective layer in this order.

For example, a resin material can be used as the material constituting the protective layer. Examples of the resin material include polyester, polyamide, polyurethane, a polycarbonate, a vinyl resin, a styrene resin, an acrylic resin, an acrylic polyol resin, a cellulose resin, a phenoxy resin, an epoxy resin, a resin obtained by silicone-modifying each of these resins, an ultraviolet absorbing resin, and an ionizing radiation-curable resin.

Examples of the polyester include polyethylene terephthalate and polyethylene naphthalate. Examples of the vinyl resin include a vinyl chloride-vinyl acetate copolymer, polyvinyl chloride, polyvinyl acetate, polyvinyl alcohol, polyvinyl butyral, polyvinyl acetal, and polyvinylpyrrolidone. Examples of the cellulose resin include ethyl cellulose, hydroxyethyl cellulose, ethylhydroxy cellulose, methyl cellulose, and cellulose acetate.

Examples of the ionizing radiation-curable resin include a resin obtained by irradiating a radically polymerizable polymer or a radically polymerizable oligomer with ionizing radiation to crosslink and cure the resulting polymer or oligomer, and specific examples thereof include a resin polymerized and crosslinked by optionally adding a photopolymerization initiator to a radically polymerizable polymer or a radically polymerizable oligomer and irradiating the resulting polymer or oligomer with electron beams or ultraviolet rays.

The content proportion of the resin material in the protective layer is preferably 80% by mass or greater and more preferably 85% by mass or greater with respect to the total mass of the protective layer. In this manner, for example, sufficient durability can be imparted to the protective layer.

The protective layer may contain an additive. Examples of the additive include an ultraviolet absorber, a light stabilizer, an antioxidant, a colorant, a filler, and a release agent. The protective layer may optionally contain a colorant. The protective layer may contain a colorant to adjust the color tone of the laminated sheet to a desired color such as the skin color. Examples of the colorant include a pigment and a dye.

The content proportion of the additive in the protective layer is preferably 1% by mass or greater, more preferably 2% by mass or greater, and preferably 20% by mass or less, and more preferably 15% by mass or less with respect to the total mass of the protective layer. The content proportion of the additive in the protective layer is, for example, 1% by mass or greater and 20% by mass or less.

The thickness of the protective layer is preferably 0.1 µm or greater, more preferably 0.5 µm or greater, still more preferably 1 µm or greater, and preferably 20 µm or less, more preferably 10 µm or less, and still more preferably 5 µm or less. Such a protective layer can impart, for example, a sufficient protective function to the laminated sheet. The thickness of the protective layer is, for example, 0.1 µm or greater and 20 µm or less.

The protective layer can be formed, for example, by coating the receiving layer or the like with a coating liquid containing the above-described materials using a known method such as roll coating, reverse roll coating, gravure coating, reverse gravure coating, bar coating, or rod coating and drying the coating liquid.

The protective layer can be formed, for example, by preparing a thermal transfer sheet including a protective layer, superimposing the thermal transfer sheet on a base material film or the like corresponding to the base material layer, and transferring the protective layer by a thermal transfer process onto the receiving layer or the receiving layer on which an image is formed.

### (Pressure-sensitive adhesive layer)

The laminated sheet of the present disclosure may include a pressure-sensitive adhesive layer.

The laminated sheet of the present disclosure may include, for example, a release sheet, a pressure-sensitive adhesive layer, a base material layer, a concealing layer, a receiving layer, and a receiving layer on which an image is formed, in this order. The release sheet will be described below.

The pressure-sensitive adhesive layer is formed, for example, using a pressure-sensitive adhesive. The pressure-sensitive adhesive, also known as a pressure-sensitive type adhesive, is a material that has adhesiveness at room temperature and can adhere to an adherend by applying a pressure thereto. For example, when the adherend attached to the pressure-sensitive adhesive layer is peeled off, the pressure-sensitive adhesive layer maintains a practical adhesive strength.

Examples of the pressure-sensitive adhesive include an acrylic pressure-sensitive adhesive, a urethane-based pressure-sensitive adhesive, a silicone-based pressure-sensitive adhesive, a rubber-based pressure-sensitive adhesive, a vinyl alkyl ether-based pressure-sensitive adhesive, a polyester-based pressure-sensitive adhesive, a polyamide-based pressure-sensitive adhesive, and a fluorine-based pressure-sensitive adhesive. The pressure-sensitive adhesive may contain a solvent. For example, either an aqueous solvent or a solvent-based solvent can be used as the solvent. It is preferable to select a pressure-sensitive adhesive that is suitable for medical applications and causes less skin rash and skin irritation as the pressure-sensitive adhesive. Among such pressure-sensitive adhesives, an acrylic pressure-sensitive adhesive and a urethane-based pressure-sensitive adhesive are preferable.

The pressure-sensitive adhesive layer may contain an additive. Examples of the additive include an ultraviolet absorber, a light stabilizer, an antioxidant, a colorant, a filler, and a release agent. The pressure-sensitive adhesive layer may optionally contain a colorant. The pressure-sensitive adhesive layer may contain a colorant to adjust the color tone of the laminated sheet to a desired color such as the skin color. Examples of the colorant include a pigment and a dye.

The adhesive strength of the pressure-sensitive adhesive layer is preferably 5000 gf/50 mm or less and more preferably 100 gf/50 mm or greater and 5000 gf/50 mm or less. When the adhesive strength thereof is 5000 gf/50 mm or less, for example, the risk of damaging the adherend (particularly, the skin of a human or an animal) when the sheet is incorrectly attached or peeled off during replacement is small. When the adhesive strength thereof is 100 gf/50 mm or greater, for example, the adhesive strength with respect to the adherend (particularly, the skin of a human or an animal) can be ensured, and peeling of the sheet caused by sweating, movement, or the like of the skin can be suppressed.

The thickness of the pressure-sensitive adhesive layer is preferably 3 µm or greater, more preferably 5 µm or greater, and preferably 40 µm or less, and more preferably 30 µm or less. The thickness of the pressure-sensitive adhesive layer is, for example, 3 µm or greater and 40 µm or less.

### (Release sheet)

The laminated sheet of the present disclosure may include a release sheet.

The laminated sheet of the present disclosure may include, for example, a release sheet, a pressure-sensitive adhesive layer, a base material layer, a concealing layer, a receiving layer, and a receiving layer on which an image is formed, in this order.

Examples of the release sheet include release paper obtained by performing a release treatment on at least one surface of a paper base material and a resin film obtained by performing a release treatment on at least one surface thereof. Examples of the release treatment include a release treatment using a release agent such as a silicone resin-based release agent, an alkyd resin-based release agent, a long-chain alkyl compound-based release agent, or a fluororesin-based release agent. Examples of the resin film include a resin film formed of a resin material such as a polyolefin, a vinyl resin, a styrene resin, an acrylic resin, a fluororesin, polyester, or polyamide.

The thickness of the release sheet is preferably 50 µm or greater, more preferably 100 µm or greater, and preferably 300 µm or less, and more preferably 200 µm or less. The thickness of the release sheet is, for example, 50 µm or greater and 300 µm or less.

### (Protective sheet)

The laminated sheet of the present disclosure may include a protective sheet provided on the base material layer in a releasable manner. Examples of the protective sheet include a low-density polyethylene (LDPE) sheet and a polypropylene (PP) sheet. The protective sheet is provided with, for example, a weak pressure-sensitive adhesive layer. The weak pressure-sensitive adhesive layer can be formed by using an acrylic weak pressure-sensitive adhesive and a urethane-based weak pressure-sensitive adhesive.

The thickness of the protective sheet is, for example, 10 µm or greater and 200 µm or less.

### <Laminated sheet>

The laminated sheet of the present disclosure preferably has any of the following layer configurations. Further, in the layer configurations described below, "/" denotes the space between layers.
· Base material layer/concealing layer/receiving layer
· Base material layer/adhesive layer/concealing layer/receiving layer
· Base material layer/concealing layer/receiving layer/protective layer
· Base material layer/adhesive layer/concealing layer/receiving layer/protective layer
· Base material layer/printed layer/concealing layer/receiving layer
· Base material layer/printed layer/adhesive layer/concealing layer/receiving layer
· Base material layer/printed layer/concealing layer/receiving layer/protective layer
· Base material layer/printed layer/adhesive layer/concealing layer/receiving layer/protective layer
· Release sheet/pressure-sensitive adhesive layer/base material layer/concealing layer/receiving layer
· Release sheet/pressure-sensitive adhesive layer/base material layer/adhesive layer/concealing layer/receiving layer
· Release sheet/pressure-sensitive adhesive layer/base material layer/concealing layer/receiving layer/protective layer
· Release sheet/pressure-sensitive adhesive layer/base material layer/adhesive layer/concealing layer/receiving layer/protective layer
· Release sheet/pressure-sensitive adhesive layer/base material layer/printed layer/concealing layer/receiving layer
· Release sheet/pressure-sensitive adhesive layer/base material layer/printed layer/adhesive layer/concealing layer/receiving layer
· Release sheet/pressure-sensitive adhesive layer/base material layer/printed layer/concealing layer/receiving layer/protective layer
· Release sheet/pressure-sensitive adhesive layer/base material layer/printed layer/adhesive layer/concealing layer/receiving layer/protective layer
· Release sheet/pressure-sensitive adhesive layer/base material layer/concealing layer/receiving layer(/protective sheet)
· Release sheet/pressure-sensitive adhesive layer/base material layer/adhesive layer/concealing layer/receiving layer(/protective sheet)
· Release sheet/pressure-sensitive adhesive layer/base material layer/concealing layer/receiving layer/protective layer (/protective sheet)
· Release sheet/pressure-sensitive adhesive layer/base material layer/adhesive layer/concealing layer/receiving layer/protective layer(/protective sheet)
· Release sheet/pressure-sensitive adhesive layer/base material layer/printed layer/concealing layer/receiving layer(/protective sheet)
· Release sheet/pressure-sensitive adhesive layer/base material layer/printed layer/adhesive layer/concealing layer/receiving layer(/protective sheet)
· Release sheet/pressure-sensitive adhesive layer/base material layer/printed layer/concealing layer/receiving layer/protective layer(/protective sheet)
· Release sheet/pressure-sensitive adhesive layer/base material layer/printed layer/adhesive layer/concealing layer/receiving layer/protective layer(/protective sheet)
· Release sheet/pressure-sensitive adhesive layer/base material layer/concealing layer/receiving layer on which an image is formed
· Release sheet/pressure-sensitive adhesive layer/base material layer/adhesive layer/concealing layer/receiving layer on which an image is formed
· Release sheet/pressure-sensitive adhesive layer/base material layer/concealing layer/receiving layer on which an image is formed/protective layer
· Release sheet/pressure-sensitive adhesive layer/base material layer/adhesive layer/concealing layer/receiving layer on which an image is formed/protective layer
· Release sheet/pressure-sensitive adhesive layer/base material layer/printed layer/concealing layer/receiving layer on which an image is formed
· Release sheet/pressure-sensitive adhesive layer/base material layer/printed layer/adhesive layer/concealing layer/receiving layer on which an image is formed
· Release sheet/pressure-sensitive adhesive layer/base material layer/printed layer/concealing layer/receiving layer on which an image is formed/protective layer
· Release sheet/pressure-sensitive adhesive layer/base material layer/printed layer/adhesive layer/concealing layer/receiving layer on which an image is formed/protective layer
· Release sheet/pressure-sensitive adhesive layer/base material layer/concealing layer/receiving layer on which an image is formed(/protective sheet)
· Release sheet/pressure-sensitive adhesive layer/base material layer/adhesive layer/concealing layer/receiving layer on which an image is formed(/protective sheet)
· Release sheet/pressure-sensitive adhesive layer/base material layer/concealing layer/receiving layer on which an image is formed/protective layer(/protective sheet)
· Release sheet/pressure-sensitive adhesive layer/base material layer/adhesive layer/concealing layer/receiving layer on which an image is formed/protective layer(/protective sheet)
· Release sheet/pressure-sensitive adhesive layer/base material layer/printed layer/concealing layer/receiving layer on which an image is formed(/protective sheet)
· Release sheet/pressure-sensitive adhesive layer/base material layer/printed layer/adhesive layer/concealing layer/receiving layer on which an image is formed(/protective sheet)
· Release sheet/pressure-sensitive adhesive layer/base material layer/printed layer/concealing layer/receiving layer on which an image is formed/protective layer(/protective sheet)
· Release sheet/pressure-sensitive adhesive layer/base material layer/printed layer/adhesive layer/concealing layer/receiving layer on which an image is formed/protective layer(/protective sheet)

The laminated sheet of the present disclosure with a width of 10 mm has a tensile test force of 0.10 N or greater and 0.62 N or less at 5% elongation, as determined by the test method in conformity with JIS K 7127:1999. The tensile test force is preferably 0.10 N or greater and 0.41 N or less. When the tensile test force thereof is in the above-described range, the occurrence of wrinkles upon attachment of the laminated sheet to the skin can be suppressed, and thus the laminated sheet can be used as a skin design sheet that makes the skin look natural.

Further, when the tensile test force thereof is 0.10 N or greater and 0.41 N or less, the occurrence of wrinkles upon attachment to the skin can be more effectively suppressed in a case where the laminated sheet is used as a skin design sheet.

Further, according to the laminated sheet of the present disclosure, since the occurrence of print misalignment can be suppressed when printing is performed using a thermal transfer printer, the laminated sheet can be used as a skin design sheet that makes the skin look natural.

As a result of intensive examination conducted by the inventors of the present application, it is found that the tensile test force of the laminated sheet with a width of 10 mm at 5% elongation is affected by the thickness of the concealing layer constituting the laminated sheet and the content proportion of the white pigment in the concealing layer.

Specifically, the tensile test force of the laminated sheet increases as the thickness of the concealing layer and the content proportion of the white pigment increase. Further, when the tensile test force thereof is greater than 0.62 N, wrinkles occur upon attachment of the laminated sheet to the skin.

Meanwhile, the tensile test force of the laminated sheet decreases as the thickness of the concealing layer and the content proportion of the white pigment decrease. In this manner, the occurrence of wrinkles upon attachment of the laminated sheet to the skin can be suppressed, but the contrast ratio of the concealing layer is reduced.

The total thickness of the laminated sheet according to the present disclosure, which is composed of the base material layer, the concealing layer, and the receiving layer, is preferably 4.0 µm or greater, more preferably 6.0 µm or greater, and preferably 15.0 µm or less, and more preferably 10.0 µm or less. The total thickness of the laminated sheet is, for example, 4.0 µm or greater and 15.0 µm or less. When the total thickness of the laminated sheet is in the above-described ranges, the tensile test force of the laminated sheet with a width of 10 mm at 5% elongation is likely to satisfy the requirements described above.

### [Applications of laminated sheet]

Hereinafter, an example of the applications of the laminated sheet according to the present disclosure will be described.

In one embodiment, the laminated sheet can be used as a skin design sheet (skin sheet) to be attached to the skin by forming an image on the receiving layer. Examples of the skin design sheet include a skin concealing sheet and a tattoo sticker.

Further, in one embodiment, the laminated sheet can be used as a non-image skin design sheet without forming an image on the receiving layer.

In one embodiment, a skin design sheet can be prepared from the laminated sheet. For example, a plurality of skin design sheets may be prepared from the laminated sheet. For example, a roll-like laminated sheet may be cut to prepare individual laminated sheets in the form of a product.

When the skin design sheet is attached to the skin with, for example, blemishes, bruises, freckles, wrinkles, sagging, pores, scars, acne scars, burn scars, discoloration due to skin diseases, and the like such that the pressure-sensitive adhesive layer is in contact with the skin, these can be concealed and made less noticeable.

Further, the color of the skin design sheet can be adjusted to the user's skin tone by preparing the skin design sheet on the laminated sheet through on-demand printing from a photographic image that captures the user. In this manner, the visual discomfort felt upon attachment of the skin design sheet to the user's skin can be suppressed.

### [Method of producing skin design sheet]

The skin design sheet of the present disclosure can be prepared, for example, by a thermal transfer process.

A long base material film corresponding to the laminated sheet according to the present disclosure is prepared. The base material film may be provided with a pressure-sensitive adhesive layer and a release sheet. This base material film and the thermal transfer sheet are set in a thermal transfer printer.

The thermal transfer sheet includes a base material, and a transfer type receiving layer, a dye layer, and optionally a protective layer, which are provided in this order on one surface of the base material. The receiving layer is a transparent layer that receives a dye transferred from the thermal transfer sheet. Examples of the dye layer include a yellow dye layer, a magenta dye layer, and a cyan dye layer. The dye layer contains a binder resin and a sublimation dye. The yellow dye layer, the magenta dye layer, and the cyan dye layer can be formed by using known materials. The details of the receiving layer and the protective layer are as described above. When the receiving layer is provided on the base material film in advance, the thermal transfer sheet is not required to include a receiving layer, and the transfer of the receiving layer described below is unnecessary.

The base material film and the thermal transfer sheet are sandwiched between a thermal head and a platen roll of the thermal transfer printer so that the thermal transfer sheet is heated. The thermal head heats the transfer type receiving layer and transfers the receiving layer onto the base material film. Next, the thermal head sequentially heats the yellow dye layer, the magenta dye layer, and the cyan dye layer based on, for example, data of the skin design sheet, and transfers the dyes to the receiving layer transferred onto the base material film to form an image. In this manner, the color of the laminated sheet can be easily adjusted to the user's skin tone. Next, the protective layer of the thermal transfer sheet is heated and transferred onto the receiving layer on which an image is formed, as necessary.

A concave-convex shape may be formed by performing a shaping treatment, such as an embossing process, on the surface of the base material film as necessary. For example, an embossing plate or a shaping sheet can be used in the embossing process. The embossing plate and the shaping sheet can be used without particular limitation. The surface shapes of the embossing plate and the shaping sheet are almost inverse to the surface shapes shaped by the embossing plate and the shaping sheet.

The long laminated sheet is cut parallel to the width direction of the laminated sheet by a cutter in the thermal transfer printer to obtain individual laminated sheets. A protective sheet may be attached to the surface resin layer of the individual laminated sheets as necessary.

Next, the laminated sheet is cut into a product shape of the skin design sheet using a known cutting device. For example, when the laminated sheet is shown in plan view, the laminated sheet is punched out into a circular shape. The above-described shape is not particularly limited.

A skin design sheet having a desired shape can be prepared as described above.

In the above-described method, the pressure-sensitive adhesive layer may be provided on the base material film after the thermal transfer process. In this case, the release sheet is preferably provided after the formation of the pressure-sensitive adhesive layer.

The method of producing the skin design sheet by the thermal transfer process has been described, but the method of producing the skin design sheet of the present disclosure is not limited to the above-described method. For example, the skin design sheet may be produced by sequentially forming each layer of the laminated sheet.

Further, in the method of producing the skin design sheet of the present disclosure, the aspect of using a thermal transfer printer (thermal printer) has been described, but the printer is not limited thereto.

A thermal transfer printer, an ink jet printer, or the like can be used as the printer. Among these, a thermal transfer printer is suitable.

A sublimation type thermal transfer printer with excellent color reproducibility and gradation properties is suitable as the thermal transfer printer.

The present disclosure relates to, for example, the following items [1] to [16].
[1] A laminated sheet including at least: a receiving layer; a concealing layer; and a base material layer in this order, in which the laminated sheet with a width of 10 mm has a tensile test force of 0.10 N or greater and 0.62 N or less at 5% elongation, as determined by a test method in conformity with JIS K 7127:1999.
[2] The laminated sheet according to [1], in which the concealing layer has a thickness of 0.8 µm or greater and 6 µm or less.
[3] The laminated sheet according to [1] or [2], in which the concealing layer contains a white pigment, and a content proportion of the white pigment in the concealing layer is 40% by mass or greater and 85% by mass or less.
[4] The laminated sheet according to [3], in which the white pigment is titanium oxide.
[5] The laminated sheet according to any one of [1] to [4], in which a contrast ratio (YB/YW) of the concealing layer is 15% or greater, as determined by a test method in conformity with JIS K 5600-4-1.
[6] The laminated sheet according to any one of [1] to [4], in which a contrast ratio (YB/YW) of the concealing layer is 40% or greater, as determined by a test method in conformity with JIS K 5600-4-1.
[7] The laminated sheet according to any one of [1] to [6], in which a contrast ratio (YB/YW) of the concealing layer is 85% or less, as determined by a test method in conformity with JIS K 5600-4-1.
[8] The laminated sheet according to any one of [1] to [7], in which the base material layer has a thickness of 3 µm or greater and 10 µm or less.
[9] The laminated sheet according to any one of [1] to [7], in which the base material layer has a thickness of 3 µm or greater and 7 µm or less.
[10] The laminated sheet according to any one of [1] to [7], in which the base material layer has a thickness of 3 µm or greater and 5 µm or less.
[11] The laminated sheet according to any one of [1] to [10], in which the base material layer is a polyurethane film.
[12] The laminated sheet according to any one of [1] to [11], in which the tensile test force is 0.10 N or greater and 0.41 N or less.
[13] The laminated sheet according to any one of [1] to [12], in which a total thickness of the laminated sheet composed of the receiving layer, the concealing layer, and the base material layer is 4.0 µm or greater and 15.0 µm or less.
[14] The laminated sheet according to any one of [1] to [13], further including: a pressure-sensitive adhesive layer; and a release sheet, in which the pressure-sensitive adhesive layer and the release sheet are provided on a side of the base material layer opposite to the receiving layer.
[15] A skin design sheet including: the laminated sheet according to any one of [1] to [14], in which an image is formed on the receiving layer.
[16] A skin design sheet including: the laminated sheet according to any one of [1] to [14], in which an image is not formed on the receiving layer.

### EXAMPLES

The laminated sheet of the present disclosure will be described in more detail with reference to examples, but is not limited thereto. In the description below, "parts" denotes "parts by mass".

### [Example 1]

A polyurethane film with a thickness of 7 µm was prepared as the base material layer. A coating liquid 1 for forming a concealing layer with the following composition was applied onto one surface of the base material layer in a coating amount of 1.0 g/m² and dried to form a concealing layer 1 with a thickness of 1 µm. Further, the proportion of the white pigment in the concealing layer 1 was 58% by mass, and the contrast ratio of the concealing layer 1 was 21%.

Next, a coating liquid for forming a receiving layer with the following composition was applied onto the concealing layer 1 and dried to form a receiving layer with a thickness of 1.0 µm. In this manner, a laminated sheet with a total thickness of 9.0 µm was obtained.

### (Coating liquid 1 for forming concealing layer)

· Titanium oxide, 58 parts (R-780, manufactured by ISHIHARA SANGYO KAISHA, LTD.)
· (Meth)acrylic resin, 10.5 parts, (DIANAL (registered trademark) BR-87, manufactured by Mitsubishi Chemical Corporation)
· (Meth)acrylic resin, 31.5 parts, (DIANAL (registered trademark) BR-85, manufactured by Mitsubishi Chemical Corporation)
· Methyl ethyl ketone (MEK), 100 parts
· Toluene, 100 parts

### (Coating liquid for forming receiving layer)

· Vinyl chloride-vinyl acetate copolymer, 100 parts (1000A, manufactured by Denka Company Limited)
· Epoxy-modified silicone, 3.5 parts (X-22-3000T, manufactured by Shin-Etsu Chemical Co., Ltd.)
· Methylstyrene-modified silicone, 3.5 parts (X-24-510, manufactured by Shin-Etsu Chemical Co., Ltd.)
· Polyether-modified silicone, 2.5 parts (FZ2101, manufactured by ENEOS NUC Corporation)
· Methyl ethyl ketone (MEK), 200 parts
· Toluene, 200 parts

### [Example 2]

A laminated sheet with a total thickness of 10.0 µm was prepared in the same manner as in Example 1 except that the coating liquid 1 for forming a concealing layer was applied in a coating amount of 2.0 g/m² and dried to form a concealing layer 2 with a thickness of 2 µm. Further, the proportion of the white pigment in the concealing layer 2 was 58% by mass, and the contrast ratio of the concealing layer 2 was 35%.

### [Example 3]

A laminated sheet with a total thickness of 11.0 µm was prepared in the same manner as in Example 1 except that the coating liquid 1 for forming a concealing layer was applied in a coating amount of 3.0 g/m² and dried to form a concealing layer 3 with a thickness of 3 µm. Further, the proportion of the white pigment in the concealing layer 3 was 58% by mass, and the contrast ratio of the concealing layer 3 was 42%.

### [Example 4]

A laminated sheet with a total thickness of 12.0 µm was prepared in the same manner as in Example 1 except that the coating liquid 1 for forming a concealing layer was applied in a coating amount of 4.0 g/m² and dried to form a concealing layer 4 with a thickness of 4 µm. Further, the proportion of the white pigment in the concealing layer 4 was 58% by mass, and the contrast ratio of the concealing layer 4 was 52%.

### [Example 5]

A laminated sheet with a total thickness of 10.0 µm was prepared in the same manner as in Example 1 except that a coating liquid for forming an adhesive layer with the following composition was applied onto one surface of the base material layer in a coating amount of 0.5 g/m² and dried to form an adhesive layer, and a coating liquid 2 for forming a concealing layer with the following composition was applied onto the adhesive layer in a coating amount of 2.0 g/m² and dried to form a concealing layer 5 with a thickness of 2 µm. Further, the proportion of the white pigment in the concealing layer 5 was 85% by mass, and the contrast ratio of the concealing layer 5 was 68%.

### (Coating liquid for forming adhesive layer)

· (Meth)acrylic resin, 40 parts (AE866, manufactured by JSR Corporation)
· Polyester, 34 parts (VYLONAL (registered trademark) MD-1200, manufactured by Toyobo Co., Ltd.)
· Isopropyl alcohol (IPA), 100 parts
· Water, 100 parts

### (Coating liquid 2 for forming concealing layer)

· Titanium oxide, 85 parts (R-780, manufactured by ISHIHARA SANGYO KAISHA, LTD.)
· (Meth)acrylic resin, 12 parts, (DIANAL (registered trademark) BR-87, manufactured by Mitsubishi Chemical Corporation)
· (Meth)acrylic resin, 2 parts, (DIANAL (registered trademark) BR-85, manufactured by Mitsubishi Chemical Corporation)
· Polyester, 1 part (VYLON (registered trademark) 200, manufactured by Toyobo Co., Ltd., Tg: 67°C, Mn: 17000)
· Methyl ethyl ketone (MEK), 33 parts
· Toluene, 33 parts

### [Example 6]

A laminated sheet with a total thickness of 8.6 µm was prepared in the same manner as in Example 1 except that the coating liquid 1 for forming a concealing layer was applied in a coating amount of 0.6 g/m² and dried to form a concealing layer 6 with a thickness of 0.6 µm. Further, the proportion of the white pigment in the concealing layer 6 was 58% by mass, and the contrast ratio of the concealing layer 6 was 10%.

### [Example 7]

The coating liquid 2 for forming a concealing layer was applied onto the base material of the transfer sheet in a coating amount of 2.0 g/m² and dried to form a concealing layer 5 with a thickness of 2 µm, and the coating liquid for forming an adhesive layer was applied onto the concealing layer 5 in a coating amount of 0.5 g/m2 and dried to form an adhesive layer.

Next, the adhesive layer and the concealing layer 5 were transferred onto the concealing layer 1 of Example 1 to form a concealing layer 7 (concealing layer 1 + concealing layer 5) with a thickness of 3 µm. A laminated sheet with a total thickness of 11.0 µm was prepared in the same manner as in Example 1 except for the procedure described above. Further, the proportion of the white pigment in the concealing layer 7 was 76% by mass, and the contrast ratio of the concealing layer 7 was 80%.

### [Example 8]

A coating liquid 3 for forming a concealing layer with the following composition was applied onto one surface of the base material layer in a coating amount of 2.0 g/m² and dried to form a concealing layer 8 with a thickness of 2 µm. A laminated sheet with a total thickness of 10.0 µm was prepared in the same manner as in Example 1 except for the procedure described above. Further, the proportion of the white pigment in the concealing layer 8 was 30% by mass, and the contrast ratio of the concealing layer 8 was 13%.

### (Coating liquid 3 for forming concealing layer)

· Titanium oxide, 30 parts (R-780, manufactured by ISHIHARA SANGYO KAISHA, LTD.)
· (Meth)acrylic resin, 17.5 parts, (DIANAL (registered trademark) BR-87, manufactured by Mitsubishi Chemical Corporation)
· (Meth)acrylic resin, 52.5 parts, (DIANAL (registered trademark) BR-85, manufactured by Mitsubishi Chemical Corporation)
· Methyl ethyl ketone (MEK), 100 parts
· Toluene, 100 parts

### [Example 9]

A laminated sheet with a total thickness of 12.0 µm was prepared in the same manner as in Example 1 except that the thickness of the base material layer was changed to 10 µm. Further, the contrast ratio of the concealing layer (concealing layer 1) was 21%.

### [Example 10]

A laminated sheet with a total thickness of 7.0 µm was prepared in the same manner as in Example 1 except that the thickness of the base material layer was changed to 5 µm. Further, the contrast ratio of the concealing layer (concealing layer 1) was 21%.

### [Example 11]

A laminated sheet with a total thickness of 14.0 µm was prepared in the same manner as in Example 3 except that the thickness of the base material layer was changed to 10 µm. Further, the contrast ratio of the concealing layer (concealing layer 3) was 43%.

### [Example 12]

A laminated sheet with a total thickness of 8.0 µm was prepared in the same manner as in Example 5 except that the thickness of the base material layer was changed to 5 µm. Further, the contrast ratio of the concealing layer (concealing layer 5) was 68%.

### [Example 13]

A laminated sheet with a total thickness of 5.0 µm was prepared in the same manner as in Example 1 except that the thickness of the base material layer was changed to 3 µm. Further, the contrast ratio of the concealing layer (concealing layer 1) was 21%.

### [Comparative Example 1]

A laminated sheet with a total thickness of 15.0 µm was prepared in the same manner as in Example 4 except that the thickness of the base material layer was changed to 10 µm. Further, the contrast ratio of the concealing layer (concealing layer 4) was 52%.

### [Comparative Example 2]

A laminated sheet with a total thickness of 27.0 µm was prepared in the same manner as in Example 1 except that the thickness of the base material layer was changed to 25 µm. Further, the contrast ratio of the concealing layer (concealing layer 1) was 21%.

### [Comparative Example 3]

A laminated sheet with a total thickness of 6.0 µm was prepared in the same manner as in Example 1 except that the thickness of the base material layer was changed to 5 µm and the concealing layer was not provided.

### [Comparative Example 4]

A laminated sheet with a total thickness of 16.0 µm was prepared in the same manner as in Example 1 except that the coating liquid 1 for forming a concealing layer was applied in a coating amount of 8.0 g/m² and dried to form a concealing layer 9 with a thickness of 8 µm. Further, the proportion of the white pigment in the concealing layer 9 was 58% by mass, and the contrast ratio of the concealing layer 9 was 90%.

### [Comparative Example 5]

A coating liquid 4 for forming a concealing layer with the following composition was applied onto one surface of the base material layer in a coating amount of 2.0 g/m² and dried to form a concealing layer 10 with a thickness of 2 µm. A laminated sheet with a total thickness of 10.0 µm was prepared in the same manner as in Example 1 except for the procedure described above. Further, the proportion of the white pigment in the concealing layer 10 was 90% by mass, and the contrast ratio of the concealing layer 10 was 72%.

### (Coating liquid 4 for forming concealing layer)

· Titanium oxide, 90 parts (R-780, manufactured by ISHIHARA SANGYO KAISHA, LTD.)
· (Meth)acrylic resin, 7.0 parts, (DIANAL (registered trademark) BR-87, manufactured by Mitsubishi Chemical Corporation)
· (Meth)acrylic resin, 3.0 parts, (DIANAL (registered trademark) BR-85, manufactured by Mitsubishi Chemical Corporation)
· Methyl ethyl ketone (MEK), 100 parts
· Toluene, 100 parts

### [Measuring method]

### <Contrast ratio of concealing layer>

The contrast ratio (YB/YW) of the concealing layer was determined by a test method in conformity with JIS K 5600-4-1 (Hiding power: for light-colored paints).

Specifically, in the laminated sheets of Examples 1 to 13 and Comparative Examples 1 to 5, each pressure-sensitive adhesive layer with a thickness of 10 µm was formed using an acrylic pressure-sensitive adhesive (SK-Dyne MD-1, manufactured by Soken Chemical & Engineering Co., Ltd.) on a side of the base material layer opposite to the receiving layer. This "laminated sheet composed of a pressure-sensitive adhesive layer, a base material layer, a concealing layer, and a receiving layer" was attached onto concealing ratio test paper (1-3783-01, AS ONE Corporation), and the tristimulus values YB (the Y value of the film attached to the black part) and YW (the Y value of the film attached to the white part) were measured and calculated respectively.

### <Tensile test force of laminated sheet at 5% elongation>

The tensile test force of the laminated sheet with a width of 10 mm at 5% elongation was determined by the test method in conformity with JIS K 7127:1999 (plastics-test method of tensile properties).

Further, the tensile test force of the three-layered laminated sheet composed of a base material layer, a concealing layer, and a receiving layer, was measured using a Table-top Universal Testing Machine (EZ Test Series, manufactured by Shimadzu Corporation) as a measuring machine.
· Test specimen: Type 2, width of 10 mm
· Initial chuck distance: 40 mm
· Test speed: 10 mm/min

### [Evaluation method]

### <Wrinkles upon attachment>

In the laminated sheets of Examples 1 to 13 and Comparative Examples 1 to 5, the laminated sheets (composed of a pressure-sensitive adhesive layer, a base material layer, a concealing layer, and a receiving layer), in which each of the pressure-sensitive adhesive layers with a thickness of 10 µm was formed using an acrylic pressure-sensitive adhesive (SK-Dyne MD-1, manufactured by Soken Chemical & Engineering Co., Ltd.) on a side of the base material layer opposite to the receiving layer, were evaluated as described below.

The level of wrinkles upon attachment of the laminated sheet to the skin (attachment sites: faces and cheeks) was visually evaluated by five evaluators according to the following evaluation criteria. Further, the evaluators were selected after confirming in advance that the evaluations using standard samples were consistent. The level of wrinkles was evaluated as A when the average score evaluated by the five evaluators was 2.5 or greater, the level thereof was evaluated as B when the average score thereof was 1.1 or greater and less than 2.5, and the level thereof was evaluated as C when the average score thereof was less than 1.1.

### (Evaluators)

Evaluator 1: Japanese female, 30s
Evaluator 2: Japanese female, 40s
Evaluator 3: Japanese male, 20s
Evaluator 4: Japanese male, 30s
Evaluator 5: Japanese male, 40s

### (Evaluation criteria)

3: Wrinkles were not noticeable, which was satisfactory.
2: Minor wrinkles were observed.
1: Wrinkles were noticeable.

### <Concealing blemishes>

In the laminated sheets of Examples 1 to 13 and Comparative Examples 1 to 5, the contrast ratios of the concealing layers constituting the laminated sheets were evaluated according to the following evaluation criteria.

### (Evaluation criteria)

A: The contrast ratio was 40% or greater.
B: The contrast ratio was 15% or greater and less than 40%.
C: The contrast ratio was 1% or greater and less than 15%.
D: The contrast ratio was less than 1%.

### <Printability>

In the laminated sheets of Examples 1 to 13 and Comparative Examples 1 to 5, a gray image was printed to form a 3-dot fine line using a thermal transfer ribbon for a thermal transfer printer (DS620, manufactured by Dai Nippon Printing Co., Ltd.), the protective layer was transferred onto the image, and the printability was evaluated according to the following evaluation criteria.

### (Conditions for printer)

· Thermal head: KGT-217-12MPL20 (manufactured by KYOCERA CORPORATION)
· Average resistance of heating element: 31915 Ω
· Print density in main scanning direction: 300 dpi
· Print density in sub-scanning direction: 300 dpi
· Applied power: 0.12 W/dot
· One-line period: 5 msec
· Printing start temperature: 40°C

### (Evaluation criteria)

A: The three colors of yellow, magenta, and cyan were superimposed without misalignment, enabling reproduction of a gray color.
B: The three colors of yellow, magenta, and cyan were not superimposed, and misalignment occurred, resulting in a failure to reproduce a gray color.

The evaluation results described above are listed in Table 1.

**[Table 1]**

| | Thickness of base material layer (µm) | Thickness of concealing layer (µm) | Thickness of receiving layer (µm) | Proportion of white pigment (%) | Contrast ratio (%) | Total thickness (µm) | Tensile test force (5%) (N) | Wrinkles upon attachment | Concealing blemishes | Printability |
|---|---|---|---|---|---|---|---|---|---|---|
| Example 1 | 7 | 1 | 1 | 58 | 21 | 9.0 | 0.38 | A | B | A |
| Example 2 | 7 | 2 | 1 | 58 | 35 | 10.0 | 0.41 | A | B | A |
| Example 3 | 7 | 3 | 1 | 58 | 42 | 11.0 | 0.43 | B | A | A |
| Example 4 | 7 | 4 | 1 | 58 | 52 | 12.0 | 0.45 | B | A | A |
| Example 5 | 7 | 2 | 1 | 85 | 68 | 10.0 | 0.52 | B | A | A |
| Example 6 | 7 | 0.6 | 1 | 58 | 10 | 8.6 | 0.36 | A | C | A |
| Example 7 | 7 | 3 | 1 | 76 | 80 | 11.0 | 0.61 | B | A | A |
| Example 8 | 7 | 2 | 1 | 30 | 13 | 10.0 | 0.40 | A | C | A |
| Example 9 | 10 | 1 | 1 | 58 | 21 | 12.0 | 0.53 | B | B | A |
| Example 10 | 5 | 1 | 1 | 58 | 21 | 7.0 | 0.25 | A | B | A |
| Example 11 | 10 | 3 | 1 | 58 | 42 | 14.0 | 0.55 | B | A | A |
| Example 12 | 5 | 2 | 1 | 85 | 68 | 8.0 | 0.39 | B | A | A |
| Example 13 | 3 | 1 | 1 | 58 | 21 | 5.0 | 0.12 | A | B | A |
| Comparative Example 1 | 10 | 4 | 1 | 58 | 52 | 15.0 | 0.63 | C | A | A |
| Comparative Example 2 | 25 | 1 | 1 | 58 | 21 | 27.0 | 0.75 | C | B | A |
| Comparative Example 3 | 5 | 0 | 1 | 0 | 0 | 6.0 | 0.05 | A | D | B |
| Comparative Example 4 | 7 | 8 | 1 | 58 | 90 | 16.0 | 0.72 | C | A | A |
| Comparative Example 5 | 7 | 2 | 1 | 90 | 72 | 10.0 | 0.65 | C | A | A |

### Reference Signs List

1 laminated sheet
10 base material layer
20 concealing layer
30 receiving layer
40 pressure-sensitive adhesive layer
50 release sheet

## Claims

1. A laminated sheet comprising at least: a receiving layer; a concealing layer; and a base material layer in this order,
wherein the laminated sheet with a width of 10 mm has a tensile test force of 0.10 N or greater and 0.62 N or less at 5% elongation, as determined by a test method in conformity with JIS K 7127:1999.

2. The laminated sheet according to claim 1,
wherein the concealing layer has a thickness of 0.8 µm or greater and 6 µm or less.

3. The laminated sheet according to claim 1,
wherein the concealing layer contains a white pigment, and
a content proportion of the white pigment in the concealing layer is 40% by mass or greater and 85% by mass or less.

4. The laminated sheet according to claim 3,
wherein the white pigment is titanium oxide.

5. The laminated sheet according to claim 1,
wherein a contrast ratio (YB/YW) of the concealing layer is 15% or greater, as determined by a test method in conformity with JIS K 5600-4-1.

6. The laminated sheet according to claim 1,
wherein a contrast ratio (YB/YW) of the concealing layer is 40% or greater, as determined by a test method in conformity with JIS K 5600-4-1.

7. The laminated sheet according to claim 1,
wherein a contrast ratio (YB/YW) of the concealing layer is 85% or less, as determined by a test method in conformity with JIS K 5600-4-1.

8. The laminated sheet according to claim 1,
wherein the base material layer has a thickness of 3 µm or greater and 10 µm or less.

9. The laminated sheet according to claim 1,
wherein the base material layer has a thickness of 3 µm or greater and 7 µm or less.

10. The laminated sheet according to claim 1,
wherein the base material layer has a thickness of 3 µm or greater and 5 µm or less.

11. The laminated sheet according to claim 1,
wherein the base material layer is a polyurethane film.

12. The laminated sheet according to claim 1,
wherein the tensile test force is 0.10 N or greater and 0.41 N or less.

13. The laminated sheet according to claim 1,
wherein a total thickness of the laminated sheet composed of the receiving layer, the concealing layer, and the base material layer is 4.0 µm or greater and 15.0 µm or less.

14. The laminated sheet according to claim 1, further comprising: a pressure-sensitive adhesive layer; and a release sheet,
wherein the pressure-sensitive adhesive layer and the release sheet are provided on a side of the base material layer opposite to the receiving layer.

15. A skin design sheet comprising: the laminated sheet according to any one of claims 1 to 14,
wherein an image is formed on the receiving layer.

16. A skin design sheet comprising: the laminated sheet according to any one of claims 1 to 14,
wherein an image is not formed on the receiving layer.
